# EUROPEAN PATENT SPECIFICATION

(11) **EP 2 966 320 B1**
(45) Date of publication and mention of the grant of the patent: **22.03.2017**
(21) Application number: 15176152.5
(22) Date of filing: 09.07.2015
(51) Int. Cl.: F16H 63/18, F16H 63/34

(54) **MULTI-SPEED TRANSMISSION FOR VEHICLE**
MEHRGANGGETRIEBE FÜR EIN FAHRZEUG
TRANSMISSION À PLUSIEURS VITESSES POUR VÉHICULE

(30) Priority: 09.07.2014 JP 2014141823
(43) Date of publication of application: 13.01.2016
(73) Proprietor: TOYOTA JIDOSHA KABUSHIKI KAISHA, Toyota-shi, Aichi-ken 471-8571 (JP)
(72) Inventor: ANDO, Koji, Toyota-shi, Aichi-ken 471-8571 (JP)
(74) Representative: Intès, Didier Gérard André

(56) References cited:
- DE-A1- 10 225 467
- DE-A1- 19 543 645
- DE-C- 806 085
- JP-A- S5 498 489

## Description

### BACKGROUND OF THE INVENTION

### 1. Field of the Invention

The invention relates to a vehicular multi-speed transmission including a parallel-shaft-type constant-mesh shift mechanism, fork shafts on which shift forks and projections are provided, and a drum formed with a plurality of grooves in which the projections are received.

### 2. Description of Related Art

A vehicular multi-speed transmission is widely known which includes a parallel-shaft-type constant-mesh shift mechanism having a plurality of shift sleeves for changing the gear position, fork shafts provided with shift forks for moving the shift sleeves in axial directions and projections that protrude radially outward, and a drum mounted rotatably about an axis parallel to the fork shafts. A plurality of grooves in which the projections are received slidably in circumferential directions are formed in an outer circumferential surface of the drum. For example, a multi-speed gear transmission described in Japanese Patent Application Publication No. 54-98489 (JP 54-98489 A) is one example of this type of transmission. The multi-speed gear transmission disclosed in JP 54-98489 A includes eccentric shaft portions, parallel shaft, each arm, cable, gear, and a sector gear. The eccentric shaft portions are provided integrally at axially middle portions of the fork shafts, for supporting the shift forks. The parallel shaft extends in parallel with the fork shafts. The above-indicated each arm is fixed to each of the fork shafts and the parallel shaft, and distal end portions of these arms are in pressed contact with each other. The cable is coupled to the arm on the parallel shaft side. The gear is fitted on a shaft portion of the drum. The sector gear is supported by the parallel shaft, and is rotated such that it can be engaged with the gear. When the cable is operated, the fork shafts (eccentric shaft portions) are rotated via respective arms from the parallel shaft, so that the projections formed on the fork shaft are moved away from the grooves of the drum. Further, the drum is rotated via the sector gear and the gear from the parallel shaft, so that the projections are returned to grooves for neutral positions where no gear position is formed, without being displaced in grooves for meshing gears where gear positions are formed.

According to the technology disclosed in JP 54-98489 A, it is possible to return the gear transmission to a given neutral position (e.g., a neutral position adjacent to a position at which the lowest-vehicle-speed gear position (the lowest gear position) is located, without forming any gear position for running the vehicle (for example, without sequentially changing the gear position). However, a change gear return system for returning the transmission to the neutral position needs to include, as constituent members, the eccentric shaft portions, parallel shaft, each arm, cable, gear, sector gear, and so forth. Thus, the system requires suitably large space in radial directions about the axis. Also, a mechanism for moving the projections away from the grooves and inserting the projections in the grooves, by operating the cable, requires a considerably large number of constituent components and is thus complicated. The above-described problems have not been known, and further improvements are desired to be made in connection with the vehicular multi-speed transmission capable of promptly shifting the parallel-shaft-type constant-mesh shift mechanism to a given neutral position. Another parallel-shaft-type constant-mesh shift mechanism is disclosed in DE 102 25 467 A1.

### SUMMARY OF THE INVENTION

The invention has been developed in view of the circumstances as described above, and provides a vehicular multi-speed transmission in which a parallel-shaft-type constant-mesh shift mechanism can be promptly shifted to a given neutral position, while curbing increase in the size of the transmission.

According to one aspect of the invention, a vehicular multi-speed transmission including a shift mechanism, fork shafts, and a drum is provided. The shift mechanism is a parallel-shaft-type constant-mesh shift mechanism having a plurality of shift sleeves each configured to be moved in an axial direction of the shift mechanism so as to change a gear position. The fork shafts are provided with shift forks and projections corresponding to the respective shift sleeves, the shift forks being configured to move the shift sleeves in the axial direction of the shift mechanism, and projections protruding radially outward the respective fork shafts. The drum is mounted rotatably about an axis parallel to the fork shafts, and is provided at an outer circumferential surface with a plurality of grooves corresponding to the respective shift sleeves. The grooves are configured to receive the projections such that each of the projections can slide in a circumferential direction of the drum. The drum includes a plurality of shift drums, a base drum, and a lock mechanism. The shift drums (i) are separately provided for the respective grooves, and (ii) are located at predetermined intervals in an axial direction of the base drum. The base drum (i) is rotatably supported by a stationary member, coaxially with the shift drums, in a space radially inside of the shift drums, and (ii) is configured to hold the shift drums such that the shift drums cannot rotate relative to the base drum, and can move independently in the axial direction relative to the base drum. The lock mechanism is provided in the base drum for each of the shift drums, and the lock mechanism is configured to switch the shift drum between a locked state and a free state. The locked state is a state in which the shift drum cannot move relative to the base drum in the axial direction of the base drum. The free state is a state in which the shift drum can move relative to the base drum in the axial direction of the base drum.

According to the vehicular multi-speed transmission as described above, the drum formed with the grooves in which the projections are received is divided into the shift drums separately provided for the respective grooves, and the base drum. When each of the shift drums is placed in the free state by the lock mechanism, the shift drum can move independently in the axial direction relative to the base drum. With each of the shift drums thus sliding in the axial direction while the corresponding projection is kept received in the groove, the shift drum can be rotated while keeping the position of each shift sleeve as it is. Accordingly, if each of the shift drums is placed in the free state, the shift drum can be rotated while each of the shift sleeves is kept at an intermediate position at which any gear position for running the vehicle is not formed, and it becomes unnecessary to provide a mechanism for moving the projections away from the grooves or inserting the projections in the grooves. Also, since the lock mechanism is provided in the base drum mounted in space radially inside of the shift drums, installation space that is large in radial directions about the axis is not required. Thus, in the vehicular multi-speed transmission of the invention, the parallel-shaft-type constant-mesh shift mechanism can be promptly shifted to the given neutral position, and the size of the transmission is less likely or unlikely to be increased. When the shift drums are in the locked state, the shift drums and the base drum are integrated; therefore, the shift drums can be rotated while sequentially changing the gear position of the parallel-shaft-type constant-mesh shift mechanism, in substantially the same manner as a vehicular multi-speed transmission having a drum that is not divided into shift drums and a base drum.

In the vehicular multi-speed transmission as described above, the lock mechanism may include an operating shaft and a lock pin. The operating shaft may be mounted in a space radially inside of the base drum such that the operating shaft can move in the axial direction of the base drum. The lock pin may be received in the base drum such that a radially outer distal end portion of the lock pin and a radially inner distal end portion of the lock pin as viewed in a radial direction of the base drum can protrude from the base drum. The operating shaft may have an outer circumferential surface including a sliding face and a recessed face located adjacent to each other in the axial direction of the base drum. The sliding face may be in contact with the radially inner distal end portion of the lock pin in a condition where the radially outer distal end portion of the lock pin protrudes from the base drum. The recessed face may receive the radially inner distal end portion of the lock pin in a condition where the radially outer distal end portion of the lock pin does not protrude from the base drum. The shift drum may have an engagement hole provided in an inner circumferential surface of the shift drum. The radially outer distal end portion of the lock pin may be adapted to be received in the engagement hole, such that the shift drum cannot move relative to the base drum in the axial direction of the base drum.

According to the vehicular multi-speed transmission as described above, the locked state in which the radially outer distal end portion of the lock pin protrudes to be inserted in the engagement hole, and the free state in which the radially outer distal end portion of the lock pin does not protrude and is not received in the engagement hole, can be switched by moving the operating shaft of the lock mechanism in the axial direction. Thus, the lock pin of the lock mechanism is stored in the base drum, and the engagement hole in which the radially outer distal end portion of the lock pin is received is formed in the inner circumferential surface of the shift drum, while the recessed face that receives the radially inner distal end portion of the lock pin is formed in the outer circumferential surface of the operating shaft. With these arrangements, the size of the vehicular multi-speed transmission is less likely or unlikely to be increased in radial directions about its axis.

The vehicular multi-speed transmission may include a shaft actuator, and an electronic control unit. The shaft actuator may be configured to move the operating shaft in the axial direction of the base drum. The electronic control unit may be configured to (i) move the operating shaft to a position at which the sliding face contacts with the radially inner distal end portion of the lock pin, such that the radially outer distal end portion of the lock pin is received in the engagement hole for switching to the locked state, and (ii) move the operating shaft to a position at which the recessed face receives the radially inner distal end portion of the lock pin, such that the engagement hole and the radially outer distal end portion of the lock pin are disengaged from each other for switching to the free state.

According to the vehicular multi-speed transmission as described above, it is possible to switch the shift drums between the locked state and the free state, by moving the operating shaft in the axial direction.

In the vehicular multi-speed transmission as described above, the lock mechanism may further include a first elastic member and a second elastic member. The first elastic member may be configured to bias the operating shaft to the position at which the sliding face contacts with the radially inner distal end portion of the lock pin. The second elastic member may be configured to bias the lock pin radially inward. The electronic control unit may be configured to (i) place the shaft actuator in a non-operating state, so as to move the operating shaft to the position at which the sliding face contacts with the radially inner distal end portion of the lock pin, and (ii) place the shaft actuator in an operating state, so as to move the operating shaft to the position at which the recessed face receives the radially inner distal end portion of the lock pin.

According to the vehicular multi-speed transmission as described above, the shaft actuator is placed in the non-operating state such that the shift drums can be switched to the lock state, or the shaft actuator is placed in the operating state such that the shift drums can be switched to the free state.

In the vehicular multi-speed transmission as described above, each of the grooves may be provided in an outer circumferential surface of a corresponding one of the shift drums. The groove may be provided in a part of the shift drum as viewed in a circumferential direction of the shift drum, and the projections provided on the fork shafts may be received in the grooves such that the projections can slide in the circumferential direction of the shift drum.

According to the vehicular multi-speed transmission as described above, the projections slide along the grooves in the circumferential direction in accordance with rotation of the base drum, such that the shift drums are rotated. With the shift drums thus rotated, each of the projections moves in the axial direction of the base drum according to the position of the corresponding groove, such that the fork shaft having the projection moves in the axial direction of the base drum. Accordingly, the shift mechanism can be promptly placed in each gear position or neutral position.

The vehicular multi-speed transmission as described above may further include a drum actuator and an electronic control unit. The drum actuator may be configured to rotate the base drum. The electronic control unit may be configured to (i) rotate the base drum while the shift drums are in the locked state, so as to rotate the shift drums while sequentially changing the gear position, and (ii) rotate the base drum while the shift drums are in the free state, so as to rotate the shift drums while keeping positions of the shift sleeves.

According to the vehicular multi-speed transmission as described above, when the shift drums are in the locked state, it is possible to shift (change the gear ratio of) the vehicular multi-speed transmission by rotating the base drum. When the shift drums are in the free state, it is possible to promptly shift the parallel-shaft-type constant-mesh shift mechanism to a given neutral position by rotating the base drum, without forming any of gear positions for running the vehicle.

In the vehicular multi-speed transmission as described above, when the gear position is returned from a gear position for running a vehicle to a given neutral position, the electronic control unit may be configured to (i) rotate the base drum while the shift drums are in the locked state, so as to move the shift sleeve associated with formation of the gear position for running the vehicle to an intermediate position at which the gear position for running the vehicle is not formed, and then switch the shift drums to the free state, and (ii) rotate the base drum while the shift drums are in the free state, so as to rotate the shift drums while keeping each of the shift sleeves at an intermediate position at which a corresponding gear position for running the vehicle is not formed.

According to the vehicular multi-speed transmission as described above, when the gear position is returned from a certain gear position for running the vehicle to the given neutral position, the shift mechanism is not shifted to another gear position for running the vehicle; thus, the parallel-shaft-type constant-mesh shift mechanism can be promptly shifted to the given neutral position

In the vehicular multi-speed transmission as described above, when the gear position is shifted from the gear position for running the vehicle to another non-adjacent gear position for running the vehicle, the electronic control unit may be configured to switch the shift drums to the locked state after returning the gear position from the gear position for running the vehicle to the given neutral position, and rotate the base drum while the shift drums are in the locked state, so as to rotate the shift drums while moving one of the shift sleeves associated with formation of the other gear position for running the vehicle, to a position at which the other gear position for running the vehicle is formed. The given neutral position may be one of neutral positions of the gear position at which all of the shift sleeves are placed in the intermediate positions. The above-indicated one of the neutral positions corresponds to an intermediate position adjacent to a position at which the shift sleeve associated with formation of the other gear position for running the vehicle forms the other gear position for running the vehicle.

According to the vehicular multi-speed transmission as described above, when the parallel-shaft-type constant-mesh shift mechanism is shifted from a gear position for running the vehicle to another non-adjacent gear position for running the vehicle, the shift mechanism is promptly shifted to a given neutral position adjacent to the above-indicated other gear position for running the vehicle, and then shifted to the other gear position for running the vehicle; thus, the parallel-shaft-type constant-mesh shift mechanism can be promptly shifted to the other non-adjacent gear position for running the vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 a view schematically illustrating the configuration of a vehicular multi-speed transmission according to one embodiment of the invention, and also illustrating a principal part of a control system for various controls in the vehicular multi-speed transmission;
FIG. 2 is a view showing the shape of each groove provided in an outer circumferential surface of each shift drum shown in FIG. 1, when projected on a plane;
FIG. 3 is a schematic view partially showing the internal structure of a drum shown in FIG. 1;
FIG. 4 is a view showing an A-A section in FIG. 3, which shows a locked state of the shift drum;
FIG. 5 is an enlarged view of the drum shown in FIG. 4, which shows a free state of the shift drum; and
FIGS. 6A and 6B are flowcharts useful for explaining a principal part of control operation of an electronic control unit shown in FIG. 1, namely, control operation for promptly shifting a shift mechanism to a target gear position.

### DETAILED DESCRIPTION OF EMBODIMENTS

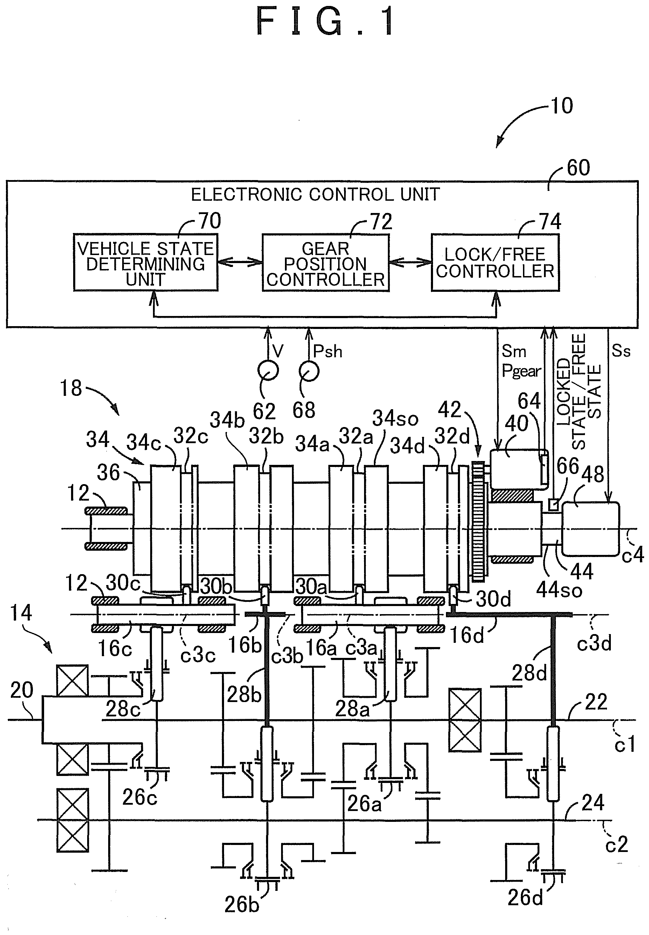

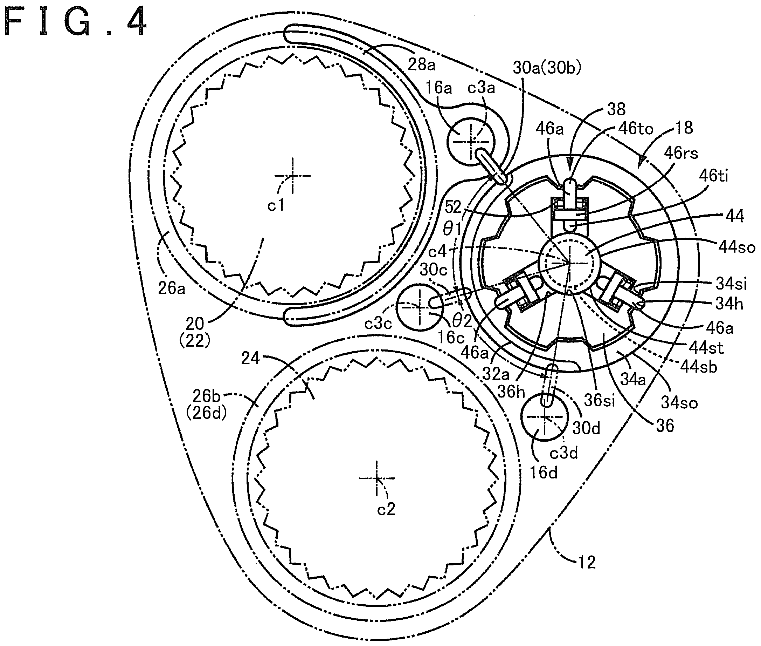

One embodiment of the invention will be described in detail with reference to the drawings. FIG. 1 schematically illustrates the configuration of a vehicular multi-speed transmission 10 (which will be called "multi-speed transmission 10") according to one embodiment of the invention. FIG. 1 is also useful for explaining control functions for various controls and a principal part of a control system in the multi-speed transmission 10. In FIG. 1, the multi-speed transmission 10 includes a parallel-shaft-type constant-mesh shift mechanism 14 (which will be called "shift mechanism 14"), fork shafts 16a, 16b, 16c, 16d (which will be called "fork shafts 16" when not particularly distinguished from each other), and a drum 18, which are housed in a case 12 (hatched portions in FIG. 1, see also FIG. 4) as a stationary member or non-rotary member.

The shift mechanism 14 includes an input shaft 20, an output shaft 22, and a countershaft 24, and power is transmitted via the countershaft 24 (or directly) between the input shaft 20 and the output shaft 22. The input shaft 20 and the output shaft 22 are mounted around the same axis c1 such that these shafts 20, 22 can rotate relative to each other, and the countershaft 24 is mounted around an axis c2 parallel to the input shaft 20 (output shaft 22). The shift mechanism 14 also includes a plurality of shift sleeves 26a, 26b, 26c, 26d (which will be called "shift sleeves 26" when not particularly distinguished from each other). The shift sleeves 26a, 26b, 26c, 26d are moved in directions (which will also be called "axial directions) parallel to the respective axes c1, c2, about the output shaft 22 and the countershaft 24, so as to change the gear position of the shift mechanism 14. The shift sleeve 26a is a first/second-speed sleeve for selectively establishing the first-speed gear position and the second-speed gear position. The shift sleeve 26b is a third/fourth-speed sleeve for selectively establishing the third-speed gear position and the fourth-speed gear position. The shift sleeve 26c is a fifth-speed sleeve for selectively establishing the fifth-speed gear position. The shift sleeve 26d is a sixth-speed sleeve for selectively establishing the sixth-speed gear position. The shift mechanism 14 thus constructed is a known technology; therefore, its specific structure and shifting operation will not be described herein.

The fork shafts 16a, 16b, 16c, 16d are supported by the case 12 such that they cannot rotate about their axes c3a, c3b, c3c, c3d parallel to the input shaft 20 (output shaft 22, countershaft 24), and can slide (move) in directions parallel to the axes c3a, c3b, c3c, c3d. The fork shafts 16 are provided for the respective shift sleeves 26. Shift forks 28a, 28b, 28c, 28d (which will be called "shift forks 28" when not distinguished from each other), which are fixed on the fork shafts 16a, 16b, 16c, 16d, are adapted to move the shift sleeves 26a, 26b, 26c, 26d, respectively, in directions parallel to the output shaft 22 (countershaft 24). The shift forks 28 are fitted on the shift sleeves 26, respectively, so as to be slidable in the circumferential directions relative to the shift sleeves 26. Also, projections 30a, 30b, 30c, 30d (which will be called "projections 30" when not particularly distinguished from each other) that protrude radially outwards are provided on the fork shafts 16a, 16b, 16c, 16d. In FIG. 1, the fork shafts 16b, 16d are illustrated in a simplified manner, as compared with the fork shafts 16a, 16c, for the sake of simplicity in illustration.

The drum 18 is supported by the case 12 such that the drum 18 can rotate about an axis c4 parallel to the fork shafts 16. The drum 18 is formed at its outer circumferential surface with grooves 32a, 32b, 32c, 32d (which will be called "grooves 32" when not particularly distinguished from each other) corresponding to the respective shift sleeves. With this arrangement, the projections 30a, 30b, 30c, 30d are received in the grooves 32a, 32b, 32c, 32d, respectively, such that the projections 30 can slide in the circumferential directions.

In this embodiment, the shift mechanism 14 can be promptly shifted to a given neutral position N0, and the size of the multi-speed transmission 10 is less likely or unlikely to be increased. The configuration of the multi-speed transmission 10 that provides these effects will be described below in detail.

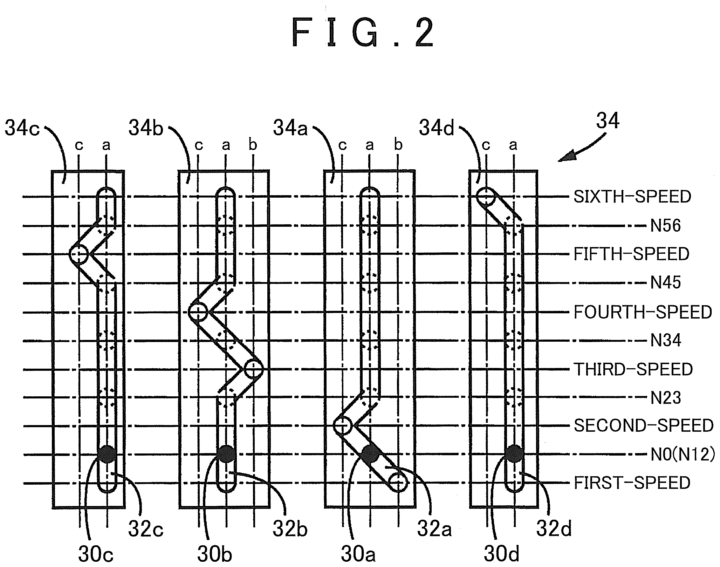

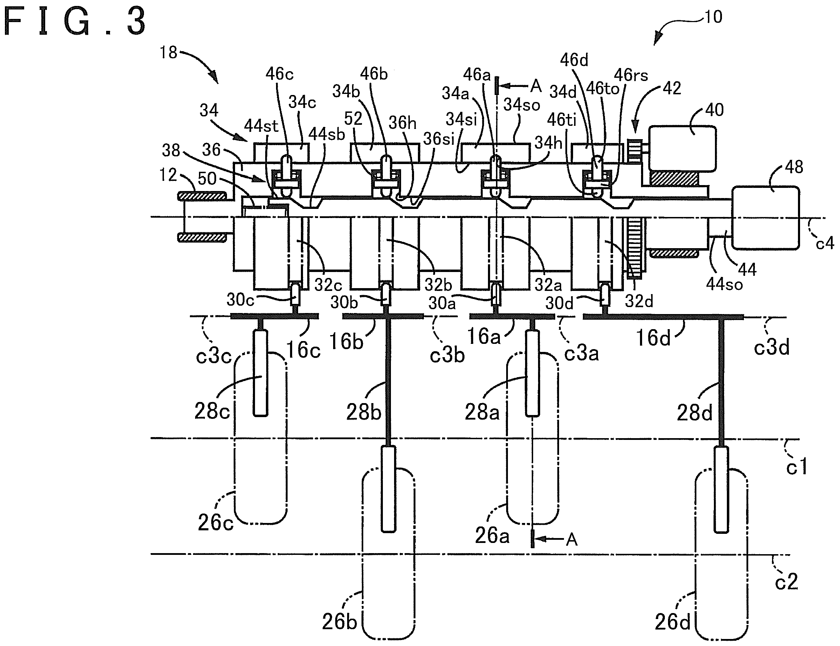

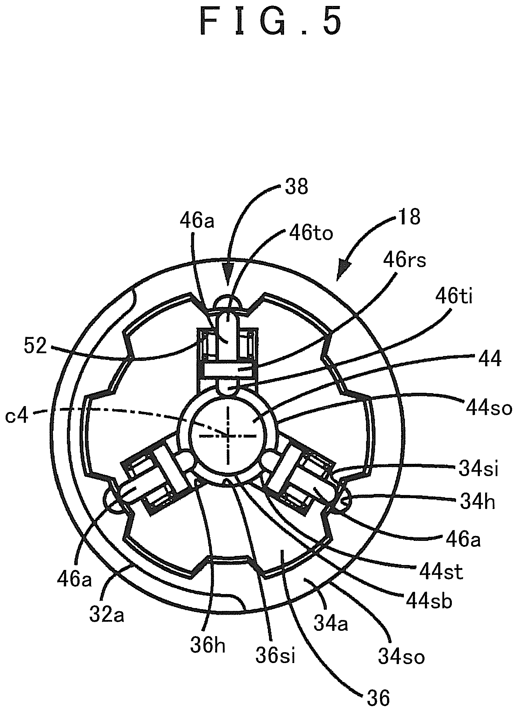

FIG. 2 shows the shapes of the grooves 32a, 32b, 32c, 32d when projected on a plane. FIG. 3 is a schematic view partially showing the internal structure of the drum 18. FIG. 4 shows an A-A section in FIG. 3, and shows shift drums 34 (which will be described later) placed in a locked state. FIG. 5 shows the drum 18 shown in FIG. 4, and shows the shift drums 34 placed in a free state.

In FIG. 1 through FIG. 5, the drum 18 includes shift drums 34, base drum 36, and a lock mechanism 38. The multi-speed transmission 10 includes a drum actuator 40 for rotating the base drum 36.

The shift drums 34 are a plurality of shift drums 34a, 34b, 34c, 34d (which will be called "shift drums 34)" when not particularly distinguished from each other) separately provided for the respective grooves 32a, 32b, 32c, 32d formed in outer circumferential surfaces 34so of the shift drums 34. The shift drums 34a, 34b, 34c, 34d are arranged at given intervals in a direction parallel to the axis c4. Accordingly, the outer circumferential surface of the drum 18 in which the grooves 32 are formed consists of the outer circumferential surfaces 34so of the shift drums 34. The base drum 36 is rotatably supported by the case 12 on the same axis c4 as the shift drums 34, in a space radially inside of the shift drums 34. The base drum 36 holds the shift drums 34a, 34b, 34c, 34d such that the shift drums 34a, 34b, 34c, 34d cannot rotate relative to the base drum 36, but can move independently relative to the base drum 36 in a direction parallel to the axis c4. The lock mechanism 38 corresponding to each of the shift drums 34a, 34b, 34c, 34d is provided in the base drum 36, and switches the shift drums 34 between a locked state in which the shift drum 34 cannot move relative to the base drum 36 in the direction parallel to the axis c4, and a free state in which the shift drum 34 can move relative to the base drum 36 in the direction parallel to the axis c4. The drum actuator 40 is, for example, a servo motor coupled to the base drum 36 via a reduction gear 42.

In the drum 18 constructed as described above, the shift drums 34 are rotated along with the base drum 36 rotated by the drum actuator 40. With the shift drums 34 thus rotated, the projections 30 are caused to slide along the grooves 32, so that the projections 30 are moved to one of "a" position, "b" position, and "c" position shown in FIG. 2. The "a" position shown in FIG. 2 is a position corresponding to an intermediate position of the shift sleeve 26 in which the shift mechanism 14 is not placed in any of gear positions for running the vehicle (the first-speed gear position through the sixth-speed gear position). The "b" position and "c" position shown in FIG. 2 correspond to gear forming positions of the shift sleeve 26 in which the shift mechanism 14 is placed in one of the gear positions for running the vehicle. For example, when the shift drums 34 are placed in the "a" positions, a neutral position N (N12, N23, N34, N45, N56) is formed as the gear position of the shift mechanism 14. When the shift drum 34a is placed in the "b" position, the first-speed gear position is formed. When the shift drum 34a is placed in the "c" position, the second-speed gear position is formed. When the shift drum 34b is placed in the "b" position, the third-speed gear position is formed. When the shift drum 34b is placed in the "c" position, the fourth-speed gear position is formed. When the shift drum 34c is placed in the "c" position, the fifth-speed gear position is formed. When the shift drum 34d is placed in the "c" position, the sixth-speed gear position is formed.

Thus, in the shift mechanism 14, the first-speed gear position through the sixth-speed gear position are sequentially formed, and the neutral position N is formed between each pair of adjacent gear positions. When the shift mechanism 14 is placed in the N range or P range, any of the above-indicated neutral positions N is not always desirably selected, but the neutral position N12 between the first-speed gear position and the second-speed gear position is preferably formed, in view of the fact that the first-speed gear position or the second-speed gear position is preferably selected as the gear position for running when the vehicle is started, for example. In this embodiment, this neutral position N12 is specified as the given neutral position N0. Namely, the given neutral position N0 is the neutral position N12 corresponding to the intermediate position adjacent to the positions in which the shift sleeve 26a associated with formation of the first-speed gear position and the second-speed gear position forms the first-speed gear position and the second-speed gear position, out of the neutral positions N of the shift mechanism 14 in which all of the shift sleeves 26 are placed in the intermediate positions. In FIG. 2, the positions of the grooves 32a, 32b, 32c, 32d as viewed in the circumferential directions of the shift drums 34a, 34b, 34c, 34d are aligned with each other for the sake of convenience. However, in fact, the grooves 32a, 32b, 32c, 32d are located with phase differences in the circumferential direction, which differences correspond to phase angles (e.g., θ1, θ2) formed by the engaging fork shafts 16a, 16b, 16c, 16d about the base drum 36.

As described above, the shift drums 34 are switched by the lock mechanisms 38 between the locked state and the free state. Therefore, the gear positions of the shift mechanism 14 are sequentially) formed by rotation of the shift drums 34, when the shift drums 34 are placed in the locked state, and the shift drums 34 and the base drum 36 are integrated.

On the other hand, when the shift drums 34 are placed in the free state, rotation of the shift drums 34 similarly cause the projections 30 to slide along the grooves 32, but the projections 30 do not move in directions parallel to the axis c4 relative to the shift drums 34. Rather, each of the shift drums 34 slides in a direction parallel to the axis c4, relative to the base drum 36. Namely, the shift drums 34 are rotated while the shift sleeves 26 are kept in their original positions. Accordingly, when the shift drums 34 are in the free state, the shift drums 34 can be rotated while the shift sleeves 26 are kept in the respective intermediate positions. For example, when the shift drums 34 are in the free state, it is possible to return the shift mechanism 14 from the neutral position N56 to the given neutral position N0, without forming any of the gear positions for running the vehicle. To this end, the shift drums 34 are separately provided with respect to the respective grooves 32. The given interval between adjacent ones of the shift drums 34 is determined in advance as an interval that is equal to or larger than the shift stroke of each of the shift sleeves 26, so that any one of the shift drums 34 can move independently in the direction parallel to the axis c4, without being restricted by another shift drum 34 located adjacent to the shift drum 34 in question.

In FIG. 3 through FIG. 5, the lock mechanism 38 is provided in common for the shift drums 34a, 34b, 34c, 34d, and includes an operating shaft 44, and lock pins 46a, 46b, 46c, 46d (which will be called "lock pins 46" when not particularly distinguished from each other). The operating shaft 44 is mounted (held) in a space radially inside of the base drum 36 such that the shaft 44 can move (slide) in a direction parallel to the axis c4. The lock pins 46a, 46b, 46c, 46d are provided for the shift drums 34a, 34b, 34c, 34d, respectively, and are housed in the base drum 36 such that a radially outer distal end portion 46to and a radially inner distal end portion 46ti of each of the lock pins 46 can protrude from the base drum 36. The multi-speed transmission 10 also includes a shaft actuator 48 for moving the operating shaft 44 in the direction parallel to the axis c4.

The operating shaft 44 has an outer circumferential surface 44so including sliding faces 44st that are in contact with the radially inner distal end portions 46ti of the lock pins 46 in a condition where the radially outer distal end portions 46to of the lock pins 46 protrude from the base drum 36, and recessed faces 44sb that receive the radially inner distal end portions 46ti of the lock pins 46 in a condition where the radially outer distal end portions 46to of the lock pins 46 do not protrude from the base drum 36. The sliding faces 44st and the recessed faces 44sb are formed adjacent to each other in the direction parallel to the axis c3 in the outer circumferential surface 44so. The sliding faces 44st are in sliding contact with the inner circumferential surface 36si of the base drum 36, and do not protrude radially outward from the inner circumferential surface 36si of the base drum 36. Thus, the recessed faces 44sb are recessed from the faces that are in sliding contact with the inner circumferential surface 36si of the base drum 36, and are formed continuously with the sliding faces 44st with somewhat inclined faces interposed therebetween. The shift drums 34a, 34b, 34c, 34d have engagement holes 34h formed in the inner circumferential surfaces 34si thereof. The radially outer distal end portions 46to of the lock pins 46 are received in the engagement holes 34h such that the shift drums 34a, 34b, 34c, 34d cannot move relative to the base drum 36 in directions parallel to the axis c4. The shaft actuator 48 is, for example, a solenoid valve that is directly or indirectly coupled with the operating shaft 44.

As shown in FIG. 3, the lock mechanism 38 includes a return spring 50 for shaft as a first elastic member, and return springs 52 for pins as second elastic members. The return spring 50 for shaft biases the operating shaft 44 toward a position at which the radially inner distal end portions 46ti of the lock pins 46 abut on the sliding faces 44st. The return springs 52 for pins bias the lock pins 46 radially inwardly of the base drum 36. The return spring 50 for shaft is housed in a space of an end portion of the operating shaft 44 opposite to an end portion thereof to which the shaft actuator 48 is coupled. The lock pins 46 are held in receiving holes 36h formed in the inner circumferential surface 36si of the base drum 36 to extend radially outward, such that the lock pins 46 can slide in radial directions of the base drum 36. A spring seat 46rs is formed in a radially middle portion of the base drum 36 to protrude from each of the lock pins 46. The return springs 52 for pins are housed in spaces between the bottoms of the receiving holes 36h and the spring seats 46rs. Holes are formed through parts of the bottoms of the receiving holes 36h, to be continuous with the spaces in which the spring seats 46rs are received, so as to allow the radially outer distal end portions 46to of the lock pins 46 to protrude from the base drum 36.

In the lock mechanism 38 constructed as described above, when the shaft actuator 48 is not in operation, the operating shaft 44 is held by the return spring 50 for shaft at the position at which the radially inner distal end portions 46ti of the lock pins 46 abut on the sliding faces 44st. Accordingly, as shown in FIGS. 3, 4, the radially outer distal end portions 46to of the lock pins 46 are fitted into (engaged with) the engagement holes 34h of the shift drums 34, so that the shift drums 34 are brought into the locked state.

When the actuator 48 for shaft is in operation, on the other hand, the operating shaft 44 is held by the shaft actuator 48 at the position at which the recessed faces 44sb receive the radially inner distal end portions 46ti of the lock pins 46. Accordingly, as shown in FIG. 5, the radially outer distal end portions 46to of the lock pins 46 are disengaged from the engagement holes 34h of the shift drums 34 by means of the return springs 52 for pins, so that the shift drums 34 are brought into the free state. Thus, the shaft actuator 48 functions as an actuator for releasing or unlocking the lock mechanism.

Referring back to FIG. 1, the multi-speed transmission 10 further has an electronic control unit 60 including a controller for changing the gear position of the shift mechanism 14. The electronic control unit 60 includes a so-called microcomputer having, for example, CPU, RAM, ROM, input/output interface, and so forth. The CPU carries out various controls on the multi-speed transmission 10, by performing signal processing according to programs stored in advance in the ROM, utilizing the temporary storage function of the RAM. As shown in FIG. 1, various actual values based on signals detected by various sensors included in the multi-speed transmission 10 are supplied to the electronic control unit 60. The above-mentioned sensors include, for example, a vehicle speed sensor 62, a drum position detection switch 64, an operating shaft position detection switch 66, and a shift position sensor 68. The above-mentioned actual values include, for example, the vehicle speed V, the rotational angle of the base drum 36 corresponding to the current gear position Pgear of the shift mechanism 14, the sliding position of the operating shaft 44 corresponding to the locked state or free state of the shift drums 34, and the shift position Psh as a position to which the shift lever is operated. As shown in FIG. 1, a motor control command signal Sm for changing the gear position of the shift mechanism 14, a solenoid valve control command signal Ss for switching the shift drums 34 between the locked state and the free state, etc. are generated from the electronic control unit 60 to the drum actuator 40, shaft actuator 48, and so forth.

The electronic control unit 60 includes a vehicle state determining means or vehicle state determining unit 70, gear position control means or gear position controller 72, and a lock/free control means or lock/free controller 74.

The vehicle state determining unit 70 determines whether the vehicle is in a stopped state, based on the vehicle speed V, for example. The vehicle state determining unit 70 also determines whether the N range or P range is requested, based on the shift position Psh, for example. The vehicle state determining unit 70 also determines whether the second-speed gear position or higher gear position is requested in the M (or S) range (manual shift range), based on the shift position Psh, for example. The vehicle state determining unit 70 also determines whether the current gear position Pgear of the shift mechanism 14 is higher than a target gear position Pgtgt set by the gear position controller 72 (namely, on the higher-vehicle-speed side (higher side) in the order of the gear positions including the neutral positions N). Also, the vehicle state determining unit 70 determines whether the current gear position Pgear of the shift mechanism 14 is a neutral position N (which will be called "adjacent N position") adjacent to a certain gear position, for example. Also, the vehicle state determining unit 70 determines whether the current gear position Pgear of the shift mechanism 14 is the given neutral position N0 (=neutral position N12), for example. Also, the vehicle state determining unit 70 determines whether the target gear position Pgtgt is the given neutral position N0, for example. Also, the vehicle state determining unit 70 determines whether the current gear position Pgear of the shift mechanism 14 is the target gear position Pgtgt.

The gear position controller 72 causes the base drum 36 to rotate while the shift drums 34 are in the locked state, for example, so as to rotate the shift drums 34 while sequentially changing the current gear position Pgear of the shift mechanism 14. Also, the gear position controller 72 causes the base drum 36 to rotate while the shift drums 34 are in the free state, for example, so as to rotate the shift drums 34 while keeping the positions of the shift sleeves 26 as they are.

The lock/free controller 74 outputs a solenoid valve control command signal Ss for bringing the shaft actuator 48 into the non-energized state (i.e., non-operating state), so as to move the operating shaft 44 to the position at which the radially inner distal end portions 46ti of the lock pins 46 abut on the sliding faces 44s. In this manner, the radially outer distal end portions 46to of the lock pins 46 are fitted into the engagement holes 34h of the shift drums 34 so that the shift drums 34 are switched to the locked state. Also, the lock/free controller 74 outputs a solenoid valve control command signal Ss for bringing the shaft actuator 48 into the energized state (i.e., operating state), so as to move the operating shaft 44 to the position at which the radially inner distal end portions 46ti of the lock pins 46 are received on the recessed faces 44sb. In this manner, the radially outer distal end portions 46to of the lock pins 46 are disengaged from the engagement holes 34h of the shift drums 34, so that the shift drums 34 are switched to the free state.

When the vehicle state determining unit 70 determines that the N range or the P range is requested, for example, the gear position controller 72 sets the target gear position Pgtgt to the given neutral position N0. When the vehicle state determining unit 70 determines that neither the N range nor the P range is requested, and none of the second-speed gear position and higher gear positions is requested, for example, the gear position controller 72 sets the target gear position Pgtgt to the first-speed gear position. Also, when the gear position controller 72 determines that neither the N range nor the P range is requested, and the second-speed gear position or higher gear position is requested, for example, the gear position controller 72 sets the target gear position Pgtgt to the second-speed gear position.

When the vehicle state determining unit 70 determines that the current gear position Pgear is higher than the target gear position Pgtgt, for example, the gear position controller 72 performs control for returning the gear position of the shift mechanism 14 from the gear position for running the vehicle to the given neutral position N0. To return the gear position of the shift mechanism 14 from the gear position for running the vehicle to the given neutral position N0, the gear position controller 72 initially outputs a motor control command signal Sm for rotating the base drum 36 while keeping the shift drums 34 in the locked state, so as to move the shift sleeve 26 associated with formation of the gear position for running to an intermediate position at which the gear position for running is not formed (for example, change the gear position to an adjacent N position closer to the first-speed gear position). Then, the lock/free controller 74 switches the shift drums 34 to the free state, and the gear position controller 72 outputs a motor control command signal Sm for rotating the base drum 36 while the shift drums 34 are in the free state, so as to rotate the shift drums 34 while keeping all of the shift sleeves 26 at the intermediate positions at which the corresponding gear positions for running the vehicle are not formed, and switch the gear position to the given neutral position N0.

When the target gear position Pgtgt is the first-speed gear position or the second-speed gear position (i.e., when the gear position is shifted from the current gear position for running on the higher-vehicle-speed side to another non-adjacent gear position for running on the lower-vehicle-speed side), for example, the gear position controller 72 initially returns the gear position from the current gear position for running to the given neutral position N0 as described above. Then, the lock/free controller 74 switches the shift drums 34 to the locked state, and the gear position controller 72 outputs a motor control command signal Sm for rotating the base drum 36 while the shift drums 34 are in the locked state, so as to rotate the shift drums 34 while moving the shift sleeve 26 associated with formation of the target gear position Pgtgt to the position at which the target gear position Pgtgt is formed, and switch the gear position to the target gear position Pgtgt.

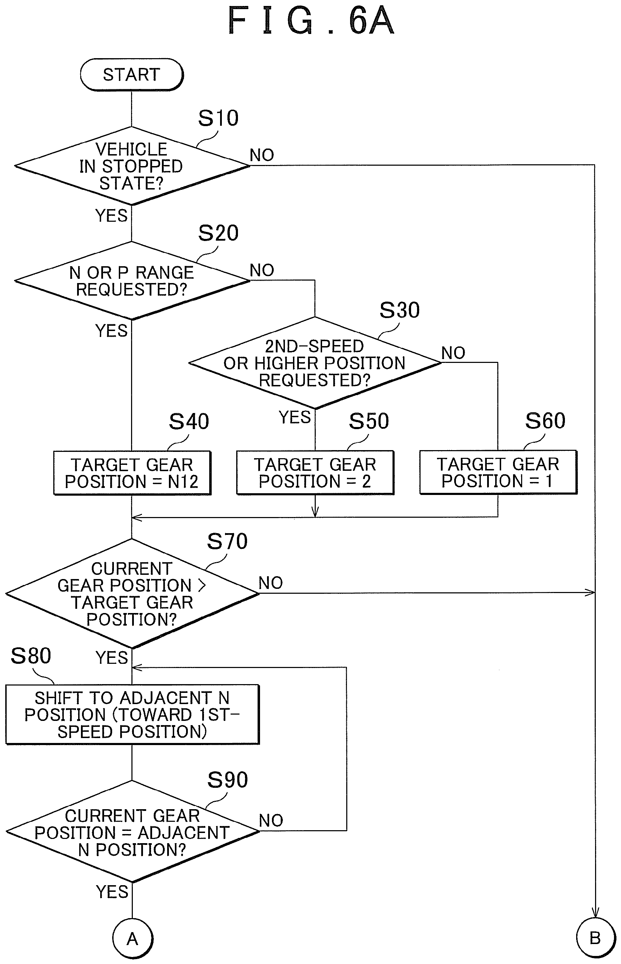

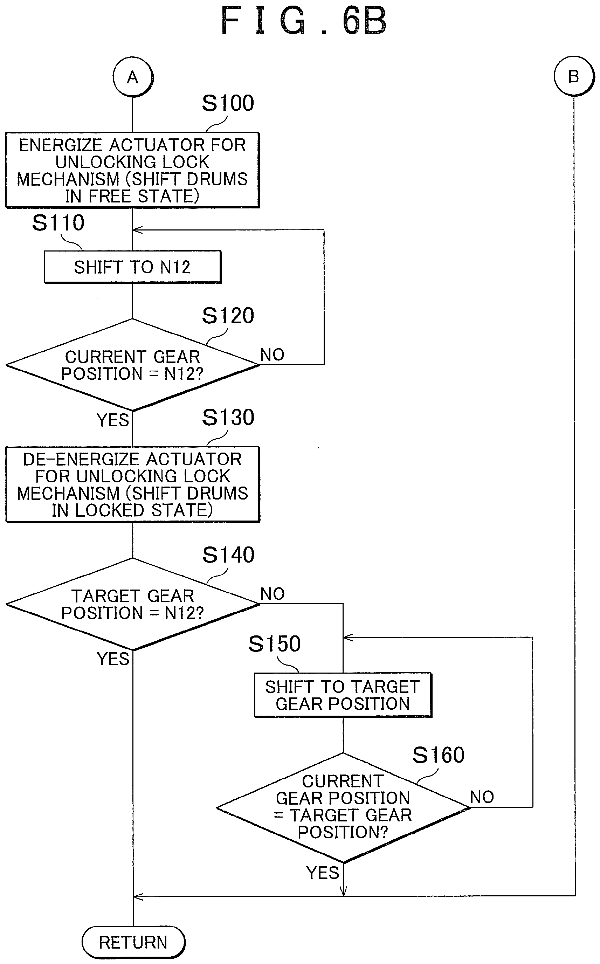

FIGS. 6A and 6B are flowcharts illustrating a principal part of control operation of the electronic control unit 60, namely, control operation for promptly shifting the shift mechanism 14 to a target gear position Pgtgt (the given neutral position N0, first-speed gear position, or the second-speed gear position). A control routine illustrated in FIGS. 6A and 6B is repeatedly executed in extremely short cycles of several milliseconds to several tens of milliseconds.

In FIGS. 6A and 6B, initially, in step S10 corresponding to the vehicle state determining unit 70, it is determined based on the vehicle speed V, for example, whether the vehicle is in a stopped state. If a negative decision (NO) is obtained in step S10, the current cycle of this routine ends. If an affirmative decision (YES) is obtained in step S10, it is determined in step S20 corresponding to the vehicle state determining unit 70 whether the N range or the P range is requested, for example. If a negative decision (NO) is obtained in step S20, it is determined in step S30 corresponding to the vehicle state determining unit 70 whether the second-speed gear position or higher gear position is requested, for example. If an affirmative decision (YES) is obtained in step S20, the target gear position Pgtgt is set to a given neutral position N0 (=neutral position N12), for example, in step S40 corresponding to the gear position controller 72. If an affirmative decision (YES) is obtained in step S30, the target gear position Pgtgt is set to the second-speed gear position, for example, in step S50 corresponding to the gear position controller 72. If a negative decision (NO) is obtained in step S30, the target gear position Pgtgt is set to the first-speed gear position, for example, in step S60 corresponding to the gear position controller 72. Following the above-indicated steps S40, S50, S60, it is determined in step S70 corresponding to the vehicle state determining unit 70 whether the current gear position Pgear is higher than the target gear position Pgtgt, for example. If a negative decision (NO) is obtained in step S70, the current cycle of this routine ends. If an affirmative decision (YES) is obtained in step S70, the gear position is changed to an adjacent N position (closer to the first-speed gear position), for example, in step S80 corresponding to the gear position controller 72. Then, it is determined in step S90 corresponding to the vehicle state determining unit 70 whether the current gear position Pgear is the adjacent N position, for example. If a negative decision (NO) is obtained in step S90, the control returns to step S80. If an affirmative decision (YES) is obtained in step S90, the shaft actuator 48 that functions as an actuator for releasing or unlocking the lock mechanism is brought into the energized state, so that the shift drums 34 are switched to the free state, in step S100 corresponding to the lock/free controller 74. Then, in step S110 corresponding to the gear position controller 72, the gear position is switched to the neutral position N12, for example. Then, in step S120 corresponding to the vehicle state determining unit 70, it is determined whether the current gear position Pgear is the neutral position N12, for example. If a negative decision (NO) is obtained in step S120, the control returns to step S110. If an affirmative decision (YES) is obtained in step S120, the shaft actuator 48 is brought into the non-energized state, so that the shift drums 34 are switched to the locked state, in step S130 corresponding to the lock/free controller 74. Then, in step S140 corresponding to the vehicle state determining unit 70, it is determined whether the target gear position Pgtgt is the neutral position N12, for example. If an affirmative decision (YES) is obtained in step S140, the current cycle of this routine ends. If a negative decision (NO) is obtained in step S140, the gear position is switched to the target gear position Pgtgt (the first-speed gear position or the second-speed gear position), for example. Then, in step S160 corresponding to the vehicle state determining unit 70, it is determined whether the current gear position Pgear is the target gear position Pgtgt. If a negative decision (NO) is obtained in step S160, the control returns to step S150. If an affirmative decision (YES) is obtained in step S160, the current cycle of this routine ends.

Control for return to the neutral position N12 when the vehicle is stopped in the fifth-speed gear position will be described when applied to the control operation in the flowcharts of FIG.S 6A and 6B as described above. If no request is made by the driver when the vehicle is stopped in the fifth-speed gear position, the target gear position Pgtgt is set to the first-speed gear position in step S60. In this case, since the current gear position Pgear (the fifth-speed gear position) is higher than the target gear position Pgtgt (the first-speed gear position), an affirmative decision (YES) is obtained in step S70. Thus, in step S80, the drum actuator 40 is rotated toward the first-speed gear position, and the gear position is switched from the fifth-speed gear position to the neutral position N45 as the adjacent N position closer to the first-speed gear position. If switching to the neutral position N45 is completed, the shift drums 34 are switched to the free state in step S100. Then, in step S110, while the shift drums 34 are in the free state, the gear position is switched from the neutral position N45 to the neutral position N12, without forming any gear position for running the vehicle. If switching to the neutral position N12 is completed, the shift drums 34 are switched to the locked state in step S130. Since the target gear position Pgtgt is not the neutral position N12 but the first-speed gear position, the drum actuator 40 is rotated toward the first-speed gear position in step S150, so that the gear position is switched from the neutral position N12 to the first-speed gear position.

As described above, according to this embodiment, the drum 18 formed with the grooves 32 in which the projections 30 are received is divided into the shift drums 34a, 34b, 34c, 34d separately provided for the respective grooves 32, and the base drum 36. When the shift drums 34 are placed in the free state by the lock mechanism 38, each of the shift drums 34 can move independently relative to the base drum 36 in the direction parallel to the axis c4. Therefore, the shift drums 34 slide in directions parallel to the axis c4 while the projections 30 are kept received in the grooves 32, so that the shift drums 34 can be rotated while the shift sleeves 26a, 26b, 26c, 26d are kept at the same positions. Accordingly, if the shift drums 34 are placed in the free state, the shift drums 34 can be rotated while each of the shift sleeves 26 is kept in the intermediate position at which no gear position for running the vehicle is formed, and it becomes unnecessary to provide a mechanism for moving the projections 30 away from the grooves 32 and inserting the projections 30 into the grooves 32. Also, the lock mechanism 38 is provided in the base drum 36 mounted in the space radially inside of the shift drums 34; therefore, installation space that is large in radial directions of the axis c4 is not required. Thus, the shift mechanism 14 can be promptly shifted to the given neutral position N0, and the size of the multi-speed transmission 10 is less likely or unlikely to be increased. Also, when the shift drums 34 are placed in the locked state, the shift drums 34 and the base drum 36 are integrated. In this condition, it is possible to rotate the shift drums 34 while sequentially changing the gear position of the shift mechanism 14, in the same manner as a vehicular multi-speed transmission having a drum that is not divided into the shift drums 34 and the base drum 36.

If the mechanism for moving the projections 30 away from the grooves 32 or inserting the projections 30 into the grooves 32 is employed, some clearances (plays) need to be formed between the grooves 32 and the projections 30 when they are in the engaged state; therefore, a countermeasure against stress concentration on the projections 30 may be needed. In this embodiment, on the other hand, the projections 30 are not moved away from the grooves 32 nor inserted into the grooves 32; therefore, it is only required to provide clearances large enough to allow the projections 30 to slide in the circumferential direction, between the grooves 32 and the projections 30, and stress concentration on the projections 30 can be curbed or reduced.

Also, in this embodiment, switching between the locked state in which the radially outer distal end portions 46to of the lock pins 46 protrude so as to be inserted in the engagement holes 34h, and the free state in which the radially outer distal end portions 46to of the lock pins 46 do not protrude and are not inserted in the engagement holes 34h, is effected by moving the operating shaft 44 of the lock mechanism 38 in the direction parallel to the axis c4. The lock pins 46 of the lock mechanism 38 are substantially housed in the base drum 36. The engagement holes 34h in which the radially outer distal end portions 46to of the lock pins 46 are received are formed in the inner circumferential surfaces 34si of the shift drums 34, and the recessed faces 44sb that receive the radially inner distal end portions 46ti of the lock pins 46 are formed in the outer circumferential surface 44so of the operating shaft 44. With these arrangements, the size of the multi-speed transmission 10 is less likely or unlikely to be increased in the radial directions of the axis c4.

According to this embodiment, when the shift drums 34 are in the locked state, the multi-speed transmission 10 can be shifted up or down through rotation of the base drum 36. When the shift drums 34 are in the free state, the shift mechanism 14 can be promptly shifted to the given neutral position N0, through rotation of the base drum 36, without forming any gear position for running the vehicle.

According to this embodiment, when the shift mechanism 14 is returned from one of the gear positions for running the vehicle to the given neutral position N0, the shift mechanism 14 is not shifted to another gear position for running the vehicle; therefore, the shift mechanism 14 can be promptly shifted to the given neutral position N0.

According to this embodiment, when the shift mechanism 14 is shifted from one of the gear positions for running the vehicle, to another non-adjacent gear position for running the vehicle (in this embodiment, the first-speed gear position or the second-speed gear position), the shift mechanism 14 is promptly shifted to the given neutral position N0, and then shifted to the other non-adjacent gear position for running the vehicle. Thus, the shift mechanism 14 can be promptly shifted to the other non-adjacent gear position for running the vehicle.

According to this embodiment, it is possible to switch the shift drums 34 between the locked state and the free state, by moving the operating shaft 44 in the direction parallel to the axis c4.

According to this embodiment, it is possible to switch the shift drums 34 to the locked state, by placing the shaft actuator 48 in the non-operating state, and is also possible to switch the shift drums 34 to the free state, by placing the shaft actuator 48 in the operating state.

While one embodiment of the invention has been described in detail with reference to the drawings, the invention may be embodied in other forms.

In the flowcharts of FIGS. 6A and 6B according to the above-described embodiment, even when the target gear position Pgtgt is the second-speed gear position, the gear position is switched to the neutral position N12 in step S110. However, the invention is not limited to this arrangement. For example, when the target gear position Pgtgt is the second-speed gear position, the gear position may be switched to the neutral position N23. The neutral position N23 is a neutral position N that is adjacent to the second-speed gear position and is closest to the higher-vehicle-speed gear position. Accordingly, the gear position can be more promptly switched to the adjacent neutral position N, when it is the neutral position N23, rather than the neutral position N12. In this sense, the given neutral position N0 may not be necessarily the neutral position N12. Also in the above-described embodiment, when the second-speed gear position or higher-speed gear position is requested, the target gear position Pgtgt is set to the second-speed gear position in step S50. However, the invention is not limited to this arrangement. For example, when the third-speed gear position is requested, the target gear position Pgtgt may be set to the third-speed gear position. When the target gear position Pgtgt is set to the third-speed gear position, the given neutral position N0 may be the neutral position N23 or the neutral position N34, which is a neutral position N adjacent to the third-speed gear position. Also, when the shift mechanism 14 is shifted from the current gear position for running the vehicle on the lower vehicle speed side, to another non-adjacent gear position for running the vehicle on the higher vehicle speed side, for example, this invention may be applied. Thus, in the flowcharts of FIGS. 6A and 6B, the manner of executing each step, etc., may be changed as appropriate within a permissible range.

While three lock pins 46 are provided for each of the shift drums 34, as shown in FIG. 5, in the above-described embodiment, this invention is not limited to this arrangement. For example, at least one lock pin 46 may be provided for each of the shift drums 34. Also, while the operating shaft 44 is in the form of a column (or cylinder) in the above-described embodiment, the invention is not limited to this arrangement. For example, the operating shaft 44 may be in the form of a prism, such as a triangular prism or a quadrangular prism.

While the shaft actuator 48 is the solenoid valve in the above-described embodiment, it may be a hydraulic actuator, for example. While M (or S) range of the shift position Psh is illustrated as the manual shift range, the manual shift range may be established when the driver operates a paddle switch as a manual shift device in the automatic shift range (D range).

It is to be understood that the above-described embodiment is a mere exemplary one, and that the invention may be embodied with various changes and improvements, based on the knowledge of those skilled in the art.

## Claims

1. A vehicular multi-speed transmission including a shift mechanism (14), fork shafts (16), and a drum (18), wherein the shift mechanism (14) is a parallel-shaft-type constant-mesh shift mechanism having a plurality of shift sleeves (26) each configured to be moved in an axial direction of the shift mechanism (14) so as to change a gear position, the fork shafts (16) being provided with shift forks (28) and projections (30) corresponding to the respective shift sleeves (26), the shift forks (28) being configured to move the shift sleeves (26) in the axial direction of the shift mechanism (14), and projections (30) protruding radially outward the respective fork shafts (16), the drum (18) being mounted rotatably about an axis parallel to the fork shafts (16), the drum (18) being provided at an outer circumferential surface with a plurality of grooves (32) corresponding to the respective shift sleeves (26), and the grooves (32) being configured to receive the projections (30) such that each of the projections (30) can slide in a circumferential direction of the drum (18), wherein:
the drum (18) includes a plurality of shift drums (34), a base drum (36), and a lock mechanism (38), the shift drums (34) being (i) separately provided for the respective grooves (32), and (ii) located at predetermined intervals in an axial direction of the base drum (36), the base drum (36) being (i) rotatably supported by a stationary member (12), coaxially with the shift drums (34), in a space radially inside of the shift drums (34), and (ii) configured to hold the shift drums (34) such that the shift drums (34) cannot rotate relative to the base drum (36) and the shift drums (34) can move independently in the axial direction of the base drum (36) relative to the base drum (36); and
the lock mechanism (38) is configured to switch the shift drum (34) between a locked state and a free state, the locked state being a state in which the shift drum (34) cannot move relative to the base drum (36) in the axial direction of the base drum (36), the free state being a state in which the shift drum (34) can move relative to the base drum (36) in the axial direction of the base drum (36) ;
the vehicular multi-speed transmission being **characterized in that** the lock mechanism (38) is provided in the base drum (36) for each of the shift drums (34).

2. The vehicular multi-speed transmission according to claim 1, **characterized in that**:
the lock mechanism (38) includes an operating shaft (44) and a lock pin (46), the operating shaft (44) being mounted in a space radially inside of the base drum (36) such that the operating shaft (44) can move in the axial direction of the base drum (36), the lock pin (46) being received in the base drum (36) such that a radially outer distal end portion of the lock pin (46) and a radially inner distal end portion of the lock pin (46) as viewed in a radial direction of the base drum (36) can protrude from the base drum (36);
the operating shaft (44) has an outer circumferential surface including a sliding face (44st) and a recessed face (44sb) located adjacent to each other in the axial direction of the base drum (36), the sliding face (44st) being in contact with the radially inner distal end portion of the lock pin (46) in a condition where the radially outer distal end portion of the lock pin (46) protrudes from the base drum (36), the recessed face (44sb) receiving the radially inner distal end portion of the lock pin (46) in a condition where the radially outer distal end portion of the lock pin (46) does not protrude from the base drum (36); and
the shift drum (34) has an engagement hole (34h) provided in an inner circumferential surface of the shift drum (34), the radially outer distal end portion of the lock pin (46) being adapted to be received in the engagement hole (34h), such that the shift drum (34) cannot move relative to the base drum (36) in the axial direction of the base drum (36).

3. The vehicular multi-speed transmission according to claim 2, **characterized by** further comprising:
a shaft actuator (48) configured to move the operating shaft (44) in the axial direction of the base drum (36); and
an electronic control unit (60) configured to (i) move the operating shaft (44) to a position at which the sliding face (44st) contacts with the radially inner distal end portion of the lock pin (46), such that the radially outer distal end portion of the lock pin (46) is received in the engagement hole (34h) for switching to the locked state, and (ii) move the operating shaft (44) to a position at which the recessed face (44sb) receives the radially inner distal end portion of the lock pin (46), such that the engagement hole (34h) and the radially outer distal end portion of the lock pin (46) are disengaged from each other for switching to the free state.

4. The vehicular multi-speed transmission according to claim 3, **characterized in that**:
the lock mechanism (38) further comprises a first elastic member (50) and a second elastic member (52), the first elastic member (50) being configured to bias the operating shaft (44) to the position at which the sliding face (44st) contacts with the radially inner distal end portion of the lock pin (46), the second elastic member (52) being configured to bias the lock pin (46) radially inward; and
the electronic control unit (60) is configured to (i) place the shaft actuator (48) in a non-operating state, so as to move the operating shaft (44) to the position at which the sliding face (44st) contacts with the radially inner distal end portion of the lock pin (46), and (ii) place the shaft actuator (48) in an operating state, so as to move the operating shaft (44) to the position at which the recessed face (44sb) receives the radially inner distal end portion of the lock pin (46).

5. The vehicular multi-speed transmission according to claim 1, **characterized in that** each of the grooves (32) is provided in an outer circumferential surface of a corresponding one of the shift drums (34), the groove (32) being provided in a part of the shift drum (34) as viewed in a circumferential direction of the shift drum (34), the projections (30) provided on the fork shafts (16) being received in the grooves (32) such that the projections (30) can slide in the circumferential direction of the shift drum (34).

6. The vehicular multi-speed transmission according to claim 1 or 2, **characterized by** further comprising:
a drum actuator (40) configured to rotate the base drum (36); and
an electronic control unit (60) configured to (i) rotate the base drum (36) while the shift drums (34) are in the locked state, so as to rotate the shift drums (34) while sequentially changing the gear position, and (ii) rotate the base drum (36) while the shift drums (34) are in the free state, so as to rotate the shift drums (34) while keeping positions of the shift sleeves (26).

7. The vehicular multi-speed transmission according to claim 6, **characterized in that**
when the gear position is returned from a gear position for running a vehicle to a given neutral position, the electronic control unit (60) is configured to (i) rotate the base drum (36) while the shift drums (34) are in the locked state, so as to move the shift sleeve (26) associated with formation of the gear position for running the vehicle to an intermediate position at which the gear position for running the vehicle is not formed, and then switch the shift drums (34) to the free state, and (ii) rotate the base drum (36) while the shift drums (34) are in the free state, so as to rotate the shift drums (34) while keeping each of the shift sleeves (26) at an intermediate position at which a corresponding gear position for running the vehicle is not formed.

8. The vehicular multi-speed transmission according to claim 7, **characterized in that**:
when the gear position is shifted from the gear position for running the vehicle to another non-adjacent gear position for running the vehicle, the electronic control unit (60) is configured to switch the shift drums (34) to the locked state after returning the gear position from the gear position for running the vehicle to the given neutral position, and rotate the base drum (36) while the shift drums (34) are in the locked state, so as to rotate the shift drums (34) while moving one of the shift sleeves (26) associated with formation of said another gear position for running the vehicle, to a position at which said another gear position for running the vehicle is formed, and
the given neutral position is one of neutral positions of the gear position at which all of the shift sleeves (26) are placed in the intermediate positions, said one of the neutral positions corresponding to an intermediate position adjacent to a position at which the shift sleeve (26) associated with formation of said another gear position for running the vehicle forms said another gear position for running the vehicle.

## Patentansprüche

1. Mehrganggetriebe für ein Fahrzeug, das einen Schaltmechanismus (14), Gabelwellen (16) und eine Trommel (18) enthält, wobei der Schaltmechanismus (14) ein Parallelwellen-Konstantverzahnungs-Schaltmechanismus ist, der mehrere Schaltmuffen (26) aufweist, die jeweils dafür konfiguriert sind, in einer axialen Richtung des Schaltmechanismus (14) bewegt zu werden, um eine Zahnradposition zu ändern, wobei die Gabelwellen (16) mit Schaltgabeln (28) und Vorsprüngen (30) versehen sind, die den jeweiligen Schaltmuffen (26) entsprechen, wobei die Schaltgabeln (28) dafür konfiguriert sind, die Schaltmuffen (26) in der axialen Richtung des Schaltmechanismus (14) zu bewegen, und Vorsprünge (30) radial auswärts der jeweiligen Gabelwellen (16) hervorstehen, wobei die Trommel (18) drehbar um eine Achse parallel zu den Gabelwellen (16) montiert ist, wobei die Trommel (18) an einer Außenumfangsfläche angeordnet ist, mit mehreren Nuten (32), die den jeweiligen Schaltmuffen (26) entsprechen, und die Nuten (32) dafür konfiguriert sind, die Vorsprünge (30) aufzunehmen, dergestalt, dass jeder der Vorsprünge (30) in einer Umfangsrichtung der Trommel (18) gleiten kann, wobei:
die Trommel (18) mehrere Schalttrommeln (34), eine Basistrommel (36) und einen Sperrmechanismus (38) enthält, wobei die Schalttrommeln (34) (i) für die jeweilige Nuten (32) separat bereitgestellt sind und (ii) in zuvor festgelegten Intervallen in einer axialen Richtung der Basistrommel (36) angeordnet sind, wobei die Basistrommel (36) (i) durch ein stationäres Element (12), koaxial mit den Schalttrommeln (34), drehbar in einem Raum gestützt wird, der sich radial im Inneren der Schalttrommeln (34) befindet, und (ii) dafür konfiguriert ist, die Schalttrommeln (34) so zu halten, dass die Schalttrommeln (34) sich relativ zu der Basistrommel (36) nicht drehen können und die Schalttrommeln (34) sich unabhängig in der axialen Richtung der Basistrommel (36) relativ zu der Basistrommel (36) bewegen können, und
der Sperrmechanismus (38) dafür konfiguriert ist, die Schalttrommel (34) zwischen einem gesperrten Zustand und einem freien Zustand umzuschalten, wobei der gesperrte Zustand ein Zustand ist, in dem die Schalttrommel (34) sich relativ zu der Basistrommel (36) in der axialen Richtung der Basistrommel (36) nicht bewegen kann, wobei der freie Zustand ein Zustand ist, in dem die Schalttrommel (34) sich relativ zu der Basistrommel (36) in der axialen Richtung der Basistrommel (36) bewegen kann,
wobei das Mehrganggetriebe für ein Fahrzeug **dadurch gekennzeichnet ist, dass** der Sperrmechanismus (38) in der Basistrommel (36) für jede der Schalttrommeln (34) angeordnet ist.

2. Mehrganggetriebe für ein Fahrzeug nach Anspruch 1, **dadurch gekennzeichnet, dass**:
der Sperrmechanismus (38) eine Betätigungswelle (44) und einen Sperrstift (46) enthält, wobei die Betätigungswelle (44) in einem Raum montiert ist, der sich radial im Inneren der Basistrommel (36) befindet, dergestalt, dass die Betätigungswelle (44) sich in der axialen Richtung der Basistrommel (36) bewegen kann, wobei der Sperrstift (46) in der Basistrommel (36) dergestalt aufgenommen ist, dass ein radial äußerer distaler Endabschnitt des Sperrstiftes (46) und ein radial innerer distaler Endabschnitt des Sperrstiftes (46) beim Blick in einer radialen Richtung der Basistrommel (36) von der Basistrommel (36) hervorstehen kann,
wobei die Betätigungswelle (44) eine Außenumfangsfläche hat, die eine Gleitfläche (44st) und eine ausgesparte Fläche (44sb) enthält, die in der axialen Richtung der Basistrommel (36) nebeneinander angeordnet sind, wobei die Gleitfläche (44st) mit dem radial inneren distalen Endabschnitt des Sperrstiftes (46) in Kontakt steht, wenn der radial äußere distale Endabschnitt des Sperrstiftes (46) von der Basistrommel (36) hervorsteht, wobei die ausgesparte Fläche (44sb) den radial inneren distalen Endabschnitt des Sperrstiftes (46) aufnimmt, wenn der radial äußere distale Endabschnitt des Sperrstiftes (46) nicht von der Basistrommel (36) hervorsteht, und
die Schalttrommel (34) ein Eingriffloch (34h) hat, das in einer Innenumfangsfläche der Schalttrommel (34) ausgebildet ist, wobei der radial äußere distale Endabschnitt des Sperrstiftes (46) dafür ausgelegt ist, in dem Eingriffloch (34h) dergestalt aufgenommen zu werden, die Schalttrommel (34) sich relativ zu der Basistrommel (36) in der axialen Richtung der Basistrommel (36) nicht bewegen kann.

3. Mehrganggetriebe für ein Fahrzeug nach Anspruch 2, **dadurch gekennzeichnet, dass** es ferner umfasst:
einen Wellenaktuator (48), der dafür konfiguriert, die Betätigungswelle (44) in der axialen Richtung der Basistrommel (36) zu bewegen, und
eine elektronische Steuereinheit (60), die dafür konfiguriert ist, (i) die Betätigungswelle (44) zu einer Position zu bewegen, an der die Gleitfläche (44st) den radial inneren distalen Endabschnitt des Sperrstiftes (46) berührt, dergestalt, dass der radial äußere distale Endabschnitt des Sperrstiftes (46) in dem Eingriffloch (34h) aufgenommen wird, um in den gesperrten Zustand zu wechseln, und (ii) die Betätigungswelle (44) zu einer Position zu bewegen, an der die ausgesparte Fläche (44sb) den radial inneren distalen Endabschnitt des Sperrstiftes (46) aufnimmt, dergestalt, dass das Eingriffloch (34h) und der radial äußere distale Endabschnitt des Sperrstiftes (46) aus ihrem gegenseitigen Eingriff gelöst werden, um in den freien Zustand zu wechseln.

4. Mehrganggetriebe für ein Fahrzeug nach Anspruch 3, **dadurch gekennzeichnet, dass**:
der Sperrmechanismus (38) ferner ein erstes elastisches Element (50) und ein zweites elastisches Element (52) umfasst, wobei das erste elastische Element (50) dafür konfiguriert ist, die Betätigungswelle (44) in die Position vorzuspannen, an der die Gleitfläche (44st) den radial inneren distalen Endabschnitt des Sperrstiftes (46) berührt, wobei das zweite elastische Element (52) dafür konfiguriert ist, den Sperrstift (46) radial einwärts vorzuspannen, und
die elektronische Steuereinheit (60) dafür konfiguriert ist, (i) den Wellenaktuator (48) in einen Nichtbetriebszustand zu versetzen, um die Betätigungswelle (44) zu der Position zu bewegen, an der die Gleitfläche (44st) den radial inneren distalen Endabschnitt des Sperrstiftes (46) berührt, und (ii) den Wellenaktuator (48) in einen Betriebszustand zu versetzen, um die Betätigungswelle (44) zu der Position zu bewegen, an der die ausgesparte Fläche (44sb) den radial inneren distalen Endabschnitt des Sperrstiftes (46) aufnimmt.

5. Mehrganggetriebe für ein Fahrzeug nach Anspruch 1, **dadurch gekennzeichnet, dass** jede der Nuten (32) in einer Außenumfangsfläche einer entsprechenden der Schalttrommeln (34) angeordnet ist, wobei die Nut (32) in einem Teil der Schalttrommel (34) - beim Blick in einer Umfangsrichtung der Schalttrommel (34) - angeordnet ist, wobei die an den Gabelwellen (16) befindlichen Vorsprünge (30) in den Nuten (32) dergestalt aufgenommen sind, dass die Vorsprünge (30) in der Umfangsrichtung der Schalttrommel (34) gleiten können.

6. Mehrganggetriebe für ein Fahrzeug nach Anspruch 1 oder 2, **dadurch gekennzeichnet, dass** es ferner umfasst:
einen Trommelaktuator (40), der dafür konfiguriert ist, die Basistrommel (36) zu drehen, und
eine elektronische Steuereinheit (60), die dafür konfiguriert ist, (i) die Basistrommel (36) zu drehen, während die Schalttrommeln (34) sich im gesperrten Zustand befinden, um die Schalttrommeln (34) zu drehen, während die Zahnradposition sequenziell geändert wird, und (ii) die Basistrommel (36) zu drehen, während sich die Schalttrommeln (34) im freien Zustand befinden, um die Schalttrommeln (34) zu drehen, während die Positionen der Schaltmuffen (26) gehalten werden.

7. Mehrganggetriebe für ein Fahrzeug nach Anspruch 6, **dadurch gekennzeichnet, dass**:
wenn die Zahnradposition von einer Zahnradposition zum Fahren eines Fahrzeugs zu einer gegebenen Neutralposition zurückgeführt wird, die elektronische Steuereinheit (60) dafür konfiguriert ist, (i) die Basistrommel (36) zu drehen, während die Schalttrommeln (34) im gesperrten Zustand sind, um die Schaltmuffe (26), die der Bildung der Zahnradposition zum Fahren des Fahrzeugs zugeordnet ist, in eine Zwischenposition zu bewegen, an der die Zahnradposition zum Fahren des Fahrzeugs nicht gebildet wird, und dann die Schalttrommeln (34) in den freien Zustand umzuschalten, und (ii) die Basistrommel (36) zu drehen, während die Schalttrommeln (34) im freien Zustand sind, um die Schalttrommeln (34) zu drehen, während jede der Schaltmuffen (26) in einer Zwischenposition gehalten wird, an der eine entsprechende Zahnradposition zum Fahren des Fahrzeugs nicht gebildet wird.

8. Mehrganggetriebe für ein Fahrzeug nach Anspruch 7, **dadurch gekennzeichnet, dass**:
wenn die Zahnradposition von der Zahnradposition zum Fahren des Fahrzeugs in eine andere, nicht-benachbarte Zahnradposition zum Fahren des Fahrzeugs geschaltet wird, die elektronische Steuereinheit (60) dafür konfiguriert ist, die Schalttrommeln (34) in den gesperrten Zustand umzuschalten, nachdem die Zahnradposition von der Zahnradposition zum Fahren des Fahrzeugs zu der gegebenen Neutralposition zurückgeführt wurde, und die Basistrommel (36) zu drehen, während die Schalttrommeln (34) im gesperrten Zustand sind, um die Schalttrommeln (34) zu drehen, während eine der Schaltmuffen (26), die der Bildung der anderen Zahnradposition zum Fahren des Fahrzeugs zugeordnet ist, in eine Position bewegt wird, an der die andere Zahnradposition zum Fahren des Fahrzeugs gebildet wird, und
die gegebene Neutralposition eine von Neutralpositionen der Zahnradposition ist, an der alle Schaltmuffen (26) sich in den Zwischenpositionen befinden, wobei die eine der Neutralpositionen einer Zwischenposition neben einer Position entspricht, an der die Schaltmuffe (26), die der Bildung der anderen Zahnradposition zum Fahren des Fahrzeugs zugeordnet ist, die andere Zahnradposition zum Fahren des Fahrzeugs bildet.

## Revendications

1. Transmission à plusieurs vitesses pour véhicule comprenant un mécanisme de changement de vitesses (14), des axes de fourches (16), et un tambour (18), dans laquelle le mécanisme de changement de vitesses (14) est un mécanisme de changement de vitesses à prise constante et arbre parallèle ayant une pluralité de manchons de changement de vitesses (26) chacun configurés pour être déplacés dans une direction axiale du mécanisme de changement de vitesses (14) de façon à changer de vitesse, les axes de fourches (16) étant munis de fourches de débrayage (28) et de saillies (30) correspondant aux manchons de changement de vitesses (26) respectifs, les fourches de débrayage (28) étant configurées pour déplacer les manchons de changement de vitesses (26) dans la direction axiale du mécanisme de changement de vitesses (14), et les saillies (30) se projetant radialement vers l'extérieur des axes de fourches respectifs (16), le tambour (18) étant monté de manière rotative autour d'un axe parallèle aux axes de fourches (16), le tambour (18) étant muni, au niveau d'une surface circonférentielle extérieure, d'une pluralité de rainures (32) correspondant aux manchons de changement de vitesses respectifs (26), et les rainures (32) étant configurées pour recevoir les saillies (30) de sorte que chacune des saillies (30) puisse coulisser dans une direction circonférentielle du tambour (18), dans laquelle :
le tambour (18) comprend une pluralité de tambours de changement de vitesses (34), un tambour de base (36), et un mécanisme de verrouillage (38), les tambours de changement de vitesses (34) étant (i) prévus séparément pour les rainures respectives (32), et (ii) situés à des intervalles prédéterminés dans une direction axiale du tambour de base (36), le tambour de base (36) étant (i) supporté de manière rotative par un élément stationnaire (12), de manière coaxiale avec les tambours de changement de vitesses (34), dans un espace radialement à l'intérieur des tambours de changement de vitesses (34), et (ii) configuré pour maintenir les tambours de changement de vitesses (34) de sorte que les tambours de changement de vitesses (34) ne puissent pas tourner par rapport au tambour de base (36), et que les tambours de changement de vitesses (34) puissent se déplacer de manière indépendante dans la direction axiale du tambour de base (36), par rapport au tambour de base (36) ; et
le mécanisme de verrouillage (38) est configuré pour faire passer le tambour de changement de vitesses (34) d'un état verrouillé à un état déverrouillé, l'état verrouillé étant un état dans lequel le tambour de changement de vitesses (34) ne peut pas se déplacer par rapport au tambour de base (36) dans la direction axiale du tambour de base (36), l'état déverrouillé étant un état dans lequel le tambour de changement de vitesses (34) peut se déplacer par rapport au tambour de base (36) dans la direction axiale du tambour de base (36) ;
la transmission à plusieurs vitesses pour véhicule étant **caractérisée en ce que** le mécanisme de verrouillage (38) est prévu dans le tambour de base (36) pour chacun des tambours de changement de vitesses (34).

2. Transmission à plusieurs vitesses pour véhicule selon la revendication 1, **caractérisée en ce que** :
le mécanisme de verrouillage (38) comprend un arbre de manoeuvre (44) et une goupille de verrouillage (46), l'arbre de manoeuvre (44) étant monté dans un espace radialement à l'intérieur du tambour de base (36) de sorte que l'arbre de manoeuvre (44) puisse se déplacer dans la direction axiale du tambour de base (36), la goupille de verrouillage (46) étant reçue dans le tambour de base (36) de sorte qu'une partie d'extrémité distale radialement externe de la goupille de verrouillage (46) et une partie d'extrémité distale radialement interne de la goupille de verrouillage (46), vues dans une direction radiale du tambour de base (36), puissent sortir du tambour de base (36) ;
l'arbre de manoeuvre (44) possède une surface circonférentielle externe comprenant une face coulissante (44st) et une face renfoncée (44sb) adjacentes l'une à l'autre dans la direction axiale du tambour de base (36), la face coulissante (44st) étant en contact avec la partie d'extrémité distale radialement interne de la goupille de verrouillage (46) lorsque la partie d'extrémité distale radialement externe de la goupille de verrouillage (46) sort du tambour de base (36), la face renfoncée (44sb) recevant la partie d'extrémité distale radialement interne de la goupille de verrouillage (46) lorsque la partie d'extrémité distale radialement externe de la goupille de verrouillage (46) ne sort pas du tambour de base (36) ; et
le tambour de changement de vitesses (34) possède un orifice d'engagement (34h) prévu dans une surface circonférentielle interne du tambour de changement de vitesses (34), la partie d'extrémité distale radialement externe de la goupille de verrouillage (46) étant adaptée pour être reçue dans l'orifice d'engagement (34h), de sorte que le tambour de changement de vitesses (34) ne puisse pas se déplacer par rapport au tambour de base (36) dans la direction axiale du tambour de base (36).

3. Transmission à plusieurs vitesses pour véhicule selon la revendication 2, **caractérisée en ce qu'**elle comprend en outre :
un actionneur d'arbre (48) configuré pour déplacer l'arbre de manoeuvre (44) dans la direction axiale du tambour de base (36) ; et
une unité de commande électronique (60) configurée pour (i) déplacer l'arbre de manoeuvre (44) dans une position dans laquelle la face coulissante (44st) touche la partie d'extrémité distale radialement interne de la goupille de verrouillage (46), de sorte que la partie d'extrémité distale radialement externe de la goupille de verrouillage (46) soit reçue dans l'orifice d'engagement (34h) afin de passer à l'état verrouillé, et (ii) déplacer l'arbre de manoeuvre (44) dans une position dans laquelle la face renfoncée (44sb) reçoit la partie d'extrémité distale radialement interne de la goupille de verrouillage (46), de sorte que l'orifice d'engagement (34h) et la partie d'extrémité distale radialement externe de la goupille de verrouillage (46) soient désengagés l'un de l'autre afin de passer à l'état déverrouillé.

4. Transmission à plusieurs vitesses pour véhicule selon la revendication 3, **caractérisée en ce que** :
le mécanisme de verrouillage (38) comprend en outre un premier élément élastique (50) et un second élément élastique (52), le premier élément élastique (50) étant configuré pour incliner l'arbre de manoeuvre (44) dans la position dans laquelle la face coulissante (44st) touche la partie d'extrémité distale radialement interne de la goupille de verrouillage (46), le second élément élastique (52) étant configuré pour incliner la goupille de verrouillage (46) radialement vers l'intérieur ; et
l'unité de commande électronique (60) est configurée pour (i) placer l'actionneur d'arbre (48) dans un état de non-fonctionnement, de façon à déplacer l'arbre de manoeuvre (44) dans la position dans laquelle la face coulissante (44st) touche la partie d'extrémité distale radialement interne de la goupille de verrouillage (46), et (ii) pour placer l'actionneur d'arbre (48) dans un état de fonctionnement, de façon à déplacer l'arbre de manoeuvre (44) dans la position dans laquelle la face renfoncée (44sb) reçoit la partie d'extrémité distale radialement interne de la goupille de verrouillage (46).

5. Transmission à plusieurs vitesses pour véhicule selon la revendication 1, **caractérisée en ce que** chacune des rainures (32) est prévue sur une surface circonférentielle externe de l'un des tambours de changement de vitesses (34) correspondants, la rainure (32) étant prévue dans une partie du tambour de changement de vitesses (34) vue dans une direction circonférentielle du tambour de changement de vitesses (34), les saillies (30) prévues sur les axes de fourches (16) étant reçues dans les rainures (32) de sorte que les saillies (30) puissent coulisser dans la direction circonférentielle du tambour de changement de vitesses (34).

6. Transmission à plusieurs vitesses pour véhicule selon la revendication 1 ou 2, **caractérisée en ce qu'**elle comprend en outre :
un actionneur de tambour (40) configuré pour faire tourner le tambour de base (36) ; et
une unité de commande électronique (60) configurée pour (i) faire tourner le tambour de base (36) pendant que les tambours de changement de vitesses (34) se trouvent dans l'état verrouillé, de façon à faire tourner les tambours de changement de vitesses (34) tout en changeant séquentiellement la position de vitesse, et (ii) pour faire tourner le tambour de base (36) pendant que les tambours de changement de vitesses (34) se trouvent dans l'état déverrouillé, de façon à faire tourner les tambours de changement de vitesses (34) tout en maintenant les positions des manchons de changement de vitesses (26).

7. Transmission à plusieurs vitesses pour véhicule selon la revendication 6, **caractérisée en ce que**
lorsque la position de vitesse passe d'une position qui permet de faire avancer un véhicule à une position neutre donnée, l'unité de commande électronique (60) est configurée pour (i) faire tourner le tambour de base (36) pendant que les tambours de changement de vitesses (34) se trouvent dans l'état verrouillé, de façon à faire passer le manchon de changement de vitesses (26) associé à la formation de la position de vitesse destinée à faire avancer le véhicule à une position intermédiaire dans laquelle la position de vitesse destinée à faire avancer le véhicule n'est pas formée, puis à faire revenir les tambours de changement de vitesses (34) à l'état déverrouillé, et (ii) pour faire tourner le tambour de base (36) pendant que les tambours de changement de vitesses (34) se trouvent dans l'état déverrouillé, de façon à faire tourner les tambours de changement de vitesses (34) tout en maintenant chacun des manchons de changement de vitesses (26) dans une position intermédiaire dans laquelle une position de vitesse correspondante destinée à faire avancer le véhicule n'est pas formée.

8. Transmission à plusieurs vitesses pour véhicule selon la revendication 7, **caractérisée en ce que** :
lorsque la position de vitesse passe de la position de vitesse destinée à faire avancer le véhicule à une autre position de vitesse non adjacente destinée à faire avancer le véhicule, l'unité de commande électronique (60) est configurée pour faire passer les tambours de changement de vitesses (34) à l'état verrouillé après avoir fait repasser la position de vitesse de la position destinée à faire avancer le véhicule à la position neutre donnée, et pour faire tourner le tambour de base (36) pendant que les tambours de changement de vitesses (34) se trouvent dans l'état verrouillé, de façon à faire tourner les tambours de changement de vitesses (34) tout en déplaçant l'un des manchons de changement de vitesses (26) associés à la formation de ladite autre position de vitesse destinée à faire avancer le véhicule dans une position dans laquelle ladite autre position de vitesse destinée à faire avancer le véhicule est formée, et
la position neutre donnée est l'une des positions neutres de la position de vitesse dans laquelle tous les manchons de changement de vitesses (26) sont placés dans les positions intermédiaires, ladite des positions neutres correspondant à une position intermédiaire adjacente à une position dans laquelle le manchon de changement de vitesse (26) associé à la formation de ladite autre position de vitesse destinée à faire avancer le véhicule forme ladite autre position de vitesse destinée à faire avancer le véhicule.
